# EUROPÄISCHE PATENTSCHRIFT

(11) **EP 0 601 966 B1**
(45) Veröffentlichungstag und Bekanntmachung des Hinweises auf die Patenterteilung: **09.07.1997**
(21) Anmeldenummer: 93810703.4
(22) Anmeldetag: 05.10.1993
(51) Int. Cl.: B03B 9/06, B09B 3/00, F26B 1/00

(54) **Verfahren zur Aufbereitung von Sekundärrohstoffen aus Abfällen und Anlage zur Durchführung des Verfahrens**
Method of treating secondary raw materials from waste and installation for carrying out the method
Procédé pour le traitement de sous-produits de départ à partir de déchets et installation pour mettre en oeuvre le procédé

(30) Priorität: 11.12.1992 DE 4241754
(43) Veröffentlichungstag der Anmeldung: 15.06.1994
(73) Patentinhaber: IKOTEK INFORMATIK, KOMMUNIKATION UND FERTIGUNGSTECHNIK AKTIENGESELLSCHAFT, FL-9490 Vaduz (LI)
(72) Erfinder: Bühlmann, Thomas, Dipl.-Ing., CH-6105 Schachen (CH)
(74) Vertreter: Rottmann, Maximilian R.

(56) Entgegenhaltungen:
- BE-A- 566 644
- CH-A- 650 172
- DE-U- 9 113 387
- FR-A- 2 167 291
- FR-A- 2 583 309

## Beschreibung

Die Erfindung betrifft ein Verfahren zur Aufbereitung von Sekundärrohstoffen aus Abfällen, d.h. aus einem uneinheitlichen Gemisch ausser Gebrauch gelangter Wertstoffe, wobei die festen Anteile der vermischten Wertstoffe zerkleinert und in artreine Fraktionen getrennt sowie einem Entfeuchtungsprozess unterworfen werden.

Als Wertstoffe werden die in Abfällen jeglicher Art und Herkunft enthaltenen, grundsätzlich wiederverwendbaren Stoffe bezeichnet. Das Bestreben geht dahin, den Abfall möglichst restlos auszuwerten bzw. dessen Wertstoffe möglichst vollständig zurückzugewinnen und zu Sekundärrohstoffen aufzubereiten, welche in den Produktionsprozess zurückgeführt werden können. Damit sollen die sonst übliche Vernichtung oder ungenützte Ablagerung des Abfalls bzw. der darin vorhandenen Wertstoffe und die mit solchen Verfahren verbundenen Umweltbelastungen weitgehend vermieden werden.

Industriell betriebene Aufbereitungsanlagen müssen gewährleisten, dass die aufbereiteten Wertstoff-Fraktionen artrein sind und den gesetzlichen Schadstoffgrenzen entsprechen. Voraussetzung dazu ist, dass der Aufbereitungsprozess in einer Anlage erfolgt, welche sauber trennt und keine Umverteilung oder Anreicherung von Schadstoffanteilen innerhalb der Wertstoffkomponenten zulässt.

Ein wesentliches Problem stellt die Kontrolle über den Verbleib der sogenannten Schadstoffe während des Aufbereitungsprozesses dar. Beispielsweise können Schwermetallverbindungen als Schadstoffe auftreten, wenn sie sich verflüchtigen bzw. durch Vergasen aus ihrem ursprünglichen Zusammenhang mit anderen anorganischen Stoffen lösen und den im gleichen Gemenge vorhandenen organischen Stoffen anlagern, von denen sie dann nur schwer wieder einwandfrei zu trennen sind. Bei der Wiederverwendung so aufbereiteter organischer Wertstoffe können mit diesen verbundene Schwermetallverbindungen in eine Umgebung gelangen, in der sie sich schädlich auswirken, z.B. wenn sie mit einem als Düngemittel verwendeten Sekundärrohstoff in den Nahrungskreislauf gelangen.

Die Gefahr einer Lostrennung potentieller Schadstoffe durch Vergasen besteht insbesondere beim Entfeuchtungsprozess, wenn für das Entfeuchten bzw. Trocknen Arbeitstemperaturen von weit über 100°C angewandt werden, wie das oft der Fall ist. Bekanntlich gibt es aber giftige Schwermetallverbindungen, insbesondere Cd- und Hg-Verbindungen, welche zum Teil bereits bei etwa 115°C zu verdampfen beginnen.

In einer bekannten Aufbereitungsanlage nach der CH-PS 650 172 ist für das Entfeuchten der Wertstoffe eine separate Trocknungsstation vorhanden, in welcher sämtliche Wertstoff-Fraktionen vor ihrer endgültigen Trennung und einer allfälligen weiteren Zerkleinerung gemeinsam mit trockener Luft behandelt werden. Meistens werden dazu hohe Lufttemperaturen angewandt, um eine mög lichst kurze Verweilzeit des Materials in der Trocknungsstation zu erreichen. Zudem lässt sich auf diese Weise auch eine Sterilisierung des Materials erzielen. Bei diesem Entfeuchtungsverfahren wird aber das Material so stark erhitzt, dass eine Umlagerung der Schadstoffe im erwähnten Sinne praktisch kaum zu vermeiden ist.

Bei einem anderen Verfahren nach der BE-A-566644 wird zur Entfeuchtung des Materials allen wesentlichen Anlageteilen separat Heissgas zugeführt. Dazu sind die Anlageteile einzeln eingekapselt, und das Heissgas wird jedem Anlageteil über separate Leitungen zu- und abgeführt. Zu dem dadurch komplizierten Aufbau mit relativ engen Zirkulationsräumen kommt als weiterer Nachteil hinzu, dass die Trocknung mit einem Verbrennungsgas durchgeführt wird, dessen Tempertur 600°C betragen soll. Unter dieser Voraussetzung ist die angestrebte Schadstoffbindung nicht möglich."

Das Ziel der Erfindung ist es, ein verbessertes Aufbereitungsverfahren der eingangs genannten Art anzugeben, bei welchem die Entfeuchtung so vorgenommen wird, dass allfällige potentielle Schadstoffe nicht freigesetzt, sondern in ihrer ursprünglichen Zustandsform belassen werden.

Dieses Ziel lässt sich erreichen, wenn erfindungsgemäss der Entfeuchtungsprozess sich durchlaufend auf alle Bereiche des Aufbereitungsprozesses erstreckt. Durch den Einbezug des Entfeuchtungsprozesses in den gesamten Aufbereitungsprozess wird die Ent feuchtungszone enorm vergrössert und damit die Einwirkungsdauer der Trocknungsluft auf das Material im Vergleich zu einer separaten Trocknungsstation erheblich verlängert. Infolgedessen kann die Entfeuchtung mit einer verhältnismässig niedrigen Temperatur der Trocknungsluft vorgenommen werden, so dass eine Umlagerung potentieller Schadstoffe vermieden wird. Zudem entfällt die zusätzliche Verweilzeit des Materials in einer separaten Trocknungsstation gemäss dem bekannten Verfahren. Dadurch verkürzt sich die gesamte Durchlaufzeit des Materials durch den gesamten Aufbereitungsprozess einschliesslich Entfeuchtung um bis zu 25%.

Aus der FR-A-216 72 91 ist es zwar bekannt, die Entfeuchtung des zerkleinerten Materials mit niedriger Temperatur (unter 60°C) vorzunehmen. Die Entfeuchtung findet aber ausdrücklich nach der Zerkleinerung in einer separaten Trockenstation statt. In dieser ist das zu trocknende Material nicht einem warmen Luftstrom unmittelbar ausgesetzt, sondern die Erwärmung erfolgt indirekt mit einem heissen Verbrennungsgas, das in einem den Arbeitsraum umgebenden Mantelrohr zirkuliert. Zur Ergänzung ist auch noch eine Warmwasserheizung vorgesehen. Diese Anlage ist nicht nur kompliziert ausgebaut, sondern arbeitet auch mit verhältnismässig geringem Durchsatz infolge der indirekten Beheizung in einem separaten Trockenraum bei niedriger Temperatur.

Der Aufbereitungsprozess umfasst in seiner Gesamtheit, so wie sie hier verstanden werden soll, alle jene Verfahrensstufen, welche schliesslich zu artrein getrennten Wertstoff-Fraktionen führen, wobei die verschiedenen Fraktionen im Endzustand eine einheitliche, für deren vorherige Trennung geeignete Stückgrösse sowie einen für die Weiterverwendung geeigneten Feuchtigkeitsgrad aufweisen. Eine allfällige weitere, als Konfektionierung bezeichnete Verarbeitung dieser Fraktionen (z.B. nochmalige Zerkleinerung, Beimengung von Zuschlägen, Verpackung der Sekundärrohstoffe) gehört nicht zum Aufbereitungsprozess im vorgenannten Sinne.

Vorzugsweise findet der gesamte Aufbereitungsprozess in einer nach aussen abgeschlossenen Atmosphäre mit einer die Entfeuchtung bewirkenden Luftzirkulation statt, wobei es zweckmässig ist, die abgeschlossene Atmosphäre auf Unterdruck zu halten. Erfahrungsgemäss verschwinden mit der Entfeuchtung des Materials auch geruchsbildende und/oder biologisch bedenkliche Bakterien, welche durch den zirkulierenden Luftstrom nach aussen abgeführt werden. In einem ausserhalb dieser abgeschlossenen Atmosphäre stattfindenden Verfahrensschritt kann die zirkulierende Luft wieder aufbereitet, d.h. entfeuchtet und gereinigt werden, wobei während der Luftaufbereitung allenfalls eine Erwärmung der Luft auf höhere Temperaturen problemlos zulässig ist, weil die der abgeschlossenen Atmosphäre entnommene Luft voraussetzungsgemäss keine Schwermetallverbindungen enthält, welche sich unter Umständen verflüchtigen und dadurch der weiteren Kontrolle entziehen könnten. Das erfindungsgemässe Verfahren hat also in dieser besonderen Ausführungsform den weiteren Vorteil, dass sich auf diese Weise mit der Entfeuchtung auch eine Desodorierung und allenfalls Sterilisierung des Materials erreichen lässt, ohne das Material selbst einer hinsichtlich der Schwermetallverbindungen überhöhten Temperatur auszusetzen.

Eine wirkungsvolle und gut regulierbare Entfeuchtung des Materials lässt sich dadurch erreichen, dass das in der abgeschlossenen Atmosphäre befindliche Wertstoffgemisch am Anfang des Aufbereitungsprozesses gekühlt und am Ende desselben wieder erwärmt wird. Vorzugsweise beträgt die Temperatur in der abgeschlossenen Atmosphäre am Anfang des Aufbereitungsprozesses wenige Grade, z.B. 5°C, über dem Gefrierpunkt von Wasser und am Ende desselben höchstens 100°C. Eine niedrige Anfangstemperatur biete Gewähr, dass die Temperatur des verarbeiteten Materials im Zuge des Aufbereitungsprozesses kein die gesetzte Grenze überschreitendes Mass erreichen kann.

Insbesondere wird auf diese Weise eine Überhitzung des Materials unter dem Einfluss der Abwärme der am Aufbereitungsprozess beteiligten Maschinen verhindert. Andererseits wird durch die erhöhte Endtemperatür eine Kondenswasserbildung beim Austritt des Materials in die freie Atmosphäre vermieden.

Die Erfindung betrifft auch eine Anlage zur Durchführung des erfindungsgemässen Verfahrens, welche dadurch gekennzeichnet ist, dass sich die maschinellen und apparativen Einrichtungen für die Verarbeitung und den Transport des Wertstoffgemisches auf dem Weg des Aufbereitungsprozesses in einem nach. aussen hermetisch abgeschlossenen Raum befinden.

Die maschinellen und apparativen Einrichtungen für die Verarbeitung des Wertstoffgemisches umfassen einerseits Zerkleinerungsmaschinen (Reisswolf, Rotorscheren, Mühlen und dgl.) und andererseits Trennvorrichtungen (Siebe, Zyklone und andere Abscheider), und für den Transport des Materials kommen vorzugsweise Förderbänder (Schwerstoffe) und Rohrleitungen (Leicht- und Schwebestoffe) zum Einsatz. Die erwähnten Einrichtungen, welche je nach der Art des zu verarbeitenden Wertstoffgemischs und der Art der gewünschten Endstoffe wahlweise eingesetzt werden, sind an sich bekannt und werden hier nicht näher erläutert.

Eine bevorzugte Ausführungsform der erfindungsgemässen Anlage besteht darin, dass der abgeschlossene Raum in mehrere Abschnitte unterteilt ist, welche durch Schleusen, insbesondere Rotorschleusen, miteinander verbunden sind. Diese Lösung ermöglicht es, im Falle einer Störung des Aufbereitungsprozesses die Raumabschnitte einzeln abzusperren und damit schädliche Auswirkungen zu lokalisieren. Ein weiterer Vorteil dieser Raumaufteilung besteht darin, dass der Entfeuchtungsprozess abschnittweise geregelt und insbesondere die Lufttemperatur in jedem Raumabschnitt dem jeweils zu erreichenden Feuchtigkeitsgrad angepasst werden kann. Auf diese Weise ist es auch einfacher, den Temperaturverlauf längs der gesamten Entfeuchtungszone zu kontrollieren, insbesondere die Lufttemperatur am Anfang des Aufbereitungsprozesses verhältnismässig tief zu halten und in der Endphase desselben im gewünschten Masse zu erhöhen.

Eine besonders zweckmässige Ausführungsform der erfindungsgemässen Anlage ergibt sich, wenn der abgeschlossene Raum als Tunnel ausgebildet ist. Dabei soll die vornehmlich in Stahlbauweise errichtete Tunnelröhre ein möglichst kleines Volumen haben, um die pro Zeiteinheit benötigte Luftmenge für die Entfeuchtung in Grenzen zu halten.

Eine solche Anlage lässt sich nicht nur in einem Gebäude unterbringen, sondern auch mobil gestalten, indem sie beispielsweise auf einem mehrere Wagen, z.B. Eisenbahnwagen, umfassenden Zug angeordnet wird. Dabei kann jeder Wagen wenigstens einen Tunnelabschnitt aufweisen. Ferner kann am einen Ende jedes Wagens eine Schleuse und am anderen Ende desselben eine bewegliche Tunnelverbindung mit lösbarem Anschluss an den nächst folgenden Tunnelabschnitt angeordnet sein. Mobile Aufbereitungsanlagen können für Noteinsätze in Gebiete mit temporär übermässigem Anfall von Abfällen zweckmässig sein.

Nachstehend wird ein Ausführungsbeispiel der Erfindung anhand der Zeichnung näher erläutert. Darin bedeuten:
- Fig. 1: das Prinzipschema eines bekannten Aufbereitungsverfahrens;
- Fig. 2: das Prinzipschema des erfindungsgemässen Aufbereitungsverfahrens; und
- Fig. 3: das Aufbauschema einer nach dem erfindungsgemässen Verfahren betriebenen Aufbereitungsanlage.

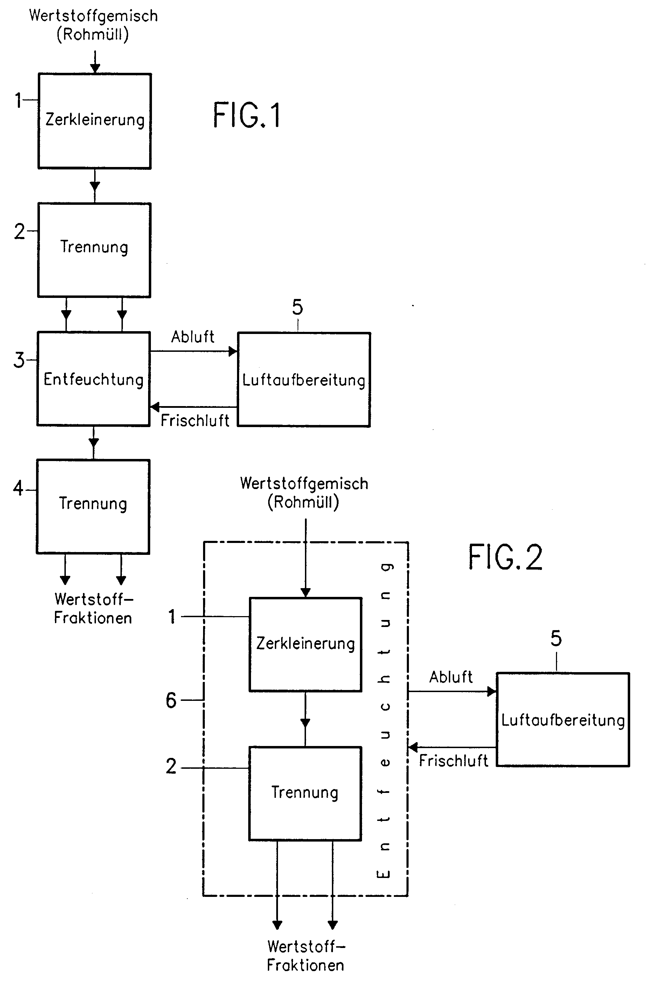

Nach einem bekannten Aufbereitungsverfahren gemäss Fig. 1 wird das Wertstoffgemisch, d.h. der Rohmüll, in einer ersten Verfahrensstufe 1 zerkleinert und in einer zweiten Verfahrensstufe 2 in artreine Wertstoff-Fraktionen getrennt. Diese werden in einer dritten Verfahrensstufe 3 gemeinsam entfeuchtet und danach in einer vierten Verfahrensstufe 4 wiederum voneinander getrennt. Die Aufbereitung der in der dritten Verfahrensstufe 3 benötigten Luft findet in einer separaten Verfahrensstufe 5 statt.

Im Gegensatz dazu erstreckt sich bei dem erfindungsgemässen Aufbereitungsverfahren gemäss Fig. 2 der Entfeuchtungsprozess durchlaufend auf alle Bereiche des Aufbereitungsprozesses. Er umfasst also die Verfahrensstufen 1 und 2, in denen das Wertstoffgemisch zerkleinert und in Fraktionen getrennt wird, während die auf eine separate Verfahrensstufe 3 konzentrierte Entfeuchtung des Materials gemäss Fig. 1 entfällt. Zu diesem Zweck findet der gesamte Aufbereitungsprozess, welcher im vorliegenden Beispiel die beiden Verfahrensstufen 1 und 2 umfasst, in einer durch die Markierung 6 angedeuteten, nach aussen abgeschlossenen Atmosphäre mit einer die Entfeuchtung des Materials bewirkenden Luftzirkulation statt. Die Aufbereitung der zirkulierenden Luft erfolgt wiederum in einer getrennten Verfahrensstufe 5. In der Praxis sind die Verfahrensstufen 1 und 2 im allgemeinen nicht in der angegebenen Weise vollständig voneinander getrennt; vielmehr finden Zerkleinerungen und Trennvorgänge meistens in abwechselnder Folge statt.

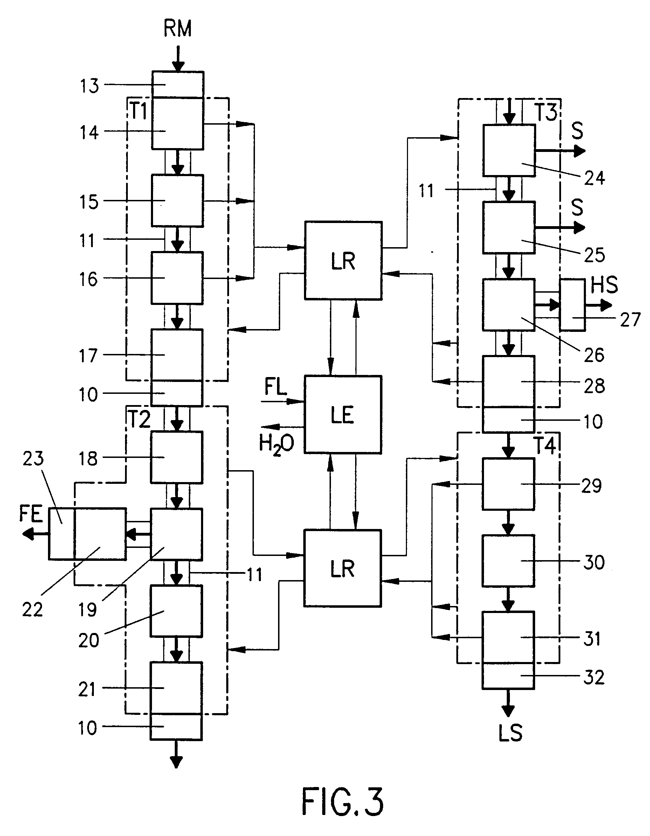

In der Aufbereitungsanlage gemäss Fig. 3 befinden sich die maschinellen Einrichtungen für die Verarbeitung und den Transport des Wertstoffgemischs in einem nach aussen hermetisch abgeschlossenen Raum, welcher im vorliegenden Beispiel als Tunnel ausgebildet ist. Dieser Tunnel ist in vier Tunnelabschnitte T1 bis T4 unterteilt, welche funktionell hintereinander angeordnet und durch Schleusen 10, insbesondere Rotorschleusen, miteinander verbunden sind. Jeder Tunnelabschnitt enthält mehrere Verarbeitungsstationen, wobei als Fördermittel zur Übergabe des Materials von der einen zur nächsten Verarbeitungsstation in den ersten drei Tunnelabschnitten T1, T2 und T3 für das hier noch gemischte schwere und leichte Material Bandförderer 11 vorgesehen sind, während das im letzten Tunnelabschnitt T4 übrig bleibende leichte Material hauptsächlich pneumatisch gefördert wird.

Die nachstehend erwähnten Zerkleinerungs- und Trennstationen sind in ihrer Art und Zusammenstellung als Beispiele zu betrachten. Je nach Anwendungsfall können einzelne der genannten Stationen mehrfach oder zusätzliche Stationen benötigt werden, während andererseits gewisse Stationen entfallen können.

Am Anfang des Tunnelabschnitts T1 befindet sich eine Aufnahmestation 14, in welcher der durch ein verschliessbares Tor 13 angelieferte Rohmüll aufgenommen und gewogen wird. Anschliessend gelangt der Rohmüll in einen Müllbunker 15, von dort aus in einen Reisswolf 16 und schliesslich auf ein Sichtband 17. Im Bereich des Sichtbandes 17 erfolgt eine Durchlaufkontrolle, wobei Sensoren gefährliches oder aus anderen Gründen für die Weiterverarbeitung ungeeignetes Material bereits lokalisieren und deren Entfernung in die Wege leiten. Innerhalb des zweiten Tunnelabschnitts T2 durchläuft das Material eine Rotorschere 18, einen Magnetabscheider 19, eine weitere Rotorschere 20 und eine Flexmühle 21. Die Stationen 16, 18, 20 und 21 zerkleinern das durchlaufende Material stufenweise auf eine maximale Korngrösse von beispielsweise 20 mm. Die am Magnetabscheider 19 anfallenden Eisenmetalle (FE) werden mittels eines Schrottbandes 22 durch eine Schleuse 23 dem Tunnelabschnitt T2 entnommen. Am Anfang des Tunnelabschnitts T3 befindet sich eine Siebstation 24, aus der mittels Filter und Gebläse Sand und Staub (S) abgeschieden werden. Dem gleichen Zweck dient ein Zyklonabscheider 25. In der Station 26, einem sogenannten Hartstoffabscheider, wird das Material in Hartstoffe (HS), das sind vorwiegend schwere, anorganische Stoffe, und in vorwiegend organische, flockenartige Leichtstoffe (LS) getrennt. Die Hartstoffe (HS) verlassen die Aufbereitungsanlage im Bereich des Tunnelabschnitts T3 durch eine Schleuse 27. Über einen Zyklonabscheider 28 gelangen die Leichtstoffe (LS) schliesslich in den letzten Tunnelabschnitt T4, welcher einen Zyklonabscheider 29, eine Hammermühle 30 und einen weiteren Zyklonabscheider 31 umfasst. Durch eine den Tunnelabschnitt T4 abschliessende Schleuse 32 werden die Leichtstoffe (LS) der Aufbereitungsanlage entnommen.

Die Abluft aus den Tunnelabschnitten T1 bis T4 und zusätzlich die direkte Abluft aus den Stationen 14, 15, 16, 28, 29 und 31 werden einem der beiden Luftreiniger LR zugeführt, welche mit einem Luftentfeuchter LE zusammenarbeiten und aus denen die gereinigte und entfeuchtete Luft wieder den einzelnen Tunnelabschnitten T1 bis T4 zugeführt wird. Zusätzlich gelangt Frischluft FL über den Luftentfeuchter LE auf den Zirkulationsweg der zur Entfeuchtung des Materials in den Tunnelabschnitten T1 bis T4 dienenden Umluft. Das im Entfeuchter LE in grossen Mengen anfallende Wasser kann für geeignete Zwecke wiederverwendet werden.

## Patentansprüche

1. Verfahren zur Aufbereitung von Sekundärrohstoffen aus einem uneinheitlichen Gemisch ausser Gebrauch gelangter Wertstoffe, wobei die festen Anteile der vermischten Wertstoffe in mehreren Verfahrensstufen schrittweise zerkleinert und in artreine Fraktionen getrennt sowie einem Entfeuchtungsprozess unterworfen werden, dadurch gekennzeichnet, dass der Entfeuchtungsprozess sich durchlaufend auf alle Bereiche des Aufbereitungsprozesses erstreckt, indem der gesamte Aufbereitungsprozess in einer nach aussen abgeschlossenen Atmosphäre mit einer die Entfeuchtung bewirkenden Luftzirkulation stattfindet.

2. Verfahren nach Anspruch 1, dadurch gekennzeichnet, dass die abgeschlossene Atmosphäre auf Unterdruck gehalten wird.

3. Verfahren nach einem der vorhergehenden Ansprüche, dadurch gekennzeichnet, dass die zirkulierende Luft der abgeschlossenen Atmosphäre entnommen, entfeuchtet und gereinigt und die Reinluft im Umlauf wieder in die abgeschlossene Atmosphäre eingeleitet wird.

4. Verfahren nach einem der vorhergehenden Ansprüche , dadurch gekennzeichnet, dass das in der abgeschlossenen Atmosphäre befindliche Wertstoffgemisch am Anfang des Aufbereitungsprozesses gekühlt und am Ende desselben wieder erwärmt wird.

5. Verfahren nach einem der vorhergehenden Ansprüche, dadurch gekennzeichnet
gekennzeichnet, dass die Temperatur in der abgeschlossenen Atmosphäre am Anfang des Aufbereitungsprozesses wenige Grade, z.B. 5°C, über dem Gefrierpunkt von Wasser liegt und am Ende desselben höchstens 100°C beträgt.

6. Anlage zur Durchführung des Verfahrens nach Anspruch 1, mit Zerkleinerungsmaschinen, Trennvorrichtungen, Fördereinrichtungen und einer Luftzirkulations- und aufbereitungsanlage, dadurch gekennzeichnet, dass sich die maschinellen und apparativen Einrichtungen für die Verarbeitung und den Transport des Wertstoffgemisches auf dem Weg des Aufbereitungsprozesses in einem nach aussen hermetisch abgeschlossenen Raum befinden, an den eine in sich geschlossene Luftzirkulations- und aufbereitungsanlage angeschlossen ist.

7. Anlage nach Anspruch 6, dadurch gekennzeichnet, dass der abgeschlossene Raum in mehrere Abschnitte (T1 bis T4) unterteilt ist, welche durch Schleusen (10), insbesondere Rotorschleusen, miteinander verbunden sind.

8. Anlage nach einem der Ansprüche 6 und 7, dadurch gekennzeichnet, dass der abgeschlossene Raum als Tunnel ausgebildet ist.

9. Anlage nach einem der Ansprüche 6 bis 8, dadurch gekennzeichnet, dass sie als mobile Anlage ausgebildet ist.

10. Anlage nach Anspruch 9, dadurch gekennzeichnet, dass sie auf einem mehrere Wagen umfassenden Zug angeordnet ist.

11. Anlage nach den Ansprüchen 7, 8 und 10, dadurch gekennzeichnet, dass jeder Wagen wenigstens einen Tunnelabschnitt aufweist.

12. Anlage nach Anspruch 11, dadurch gekennzeichnet, dass am einen Ende jedes Wagens eine Schleuse und am anderen Ende desselben eine bewegliche Tunnelverbindung mit lösbarem Anschluss an den nächst folgenden Tunnelabschnitt angeordnet sind.

## Claims

1. Method of treating secondary raw materials from a non-uniform mixture of products of value which have been taken out of service, the solid fractions of the mixed products of value being comminuted in a stepwise manner in a plurality of process steps and being separated into fractions containing only one substance, and being subjected to a dehumidification process, characterized in that the dehumidification process extends continuously over all areas of the treatment process, due to the fact that the entire treatment process takes place in an atmosphere which is sealed with respect to the outside and has an air circulation which effects the dehumidification.

2. Method according to Claim 1, characterized in that the sealed atmosphere is kept at subatmospheric pressure.

3. Method according to one of the preceding claims, characterized in that the circulating air is removed from the sealed atmosphere, dehumidified and cleaned and the clean air is recirculated into the sealed atmosphere.

4. Method according to one of the preceding claims, characterized in that the mixture of products of value which is situated in the sealed atmosphere is cooled at the start of the treatment process and is heated again at the end thereof.

5. Method according to one of the preceding claims, characterized in that the temperature in the sealed atmosphere is a few degrees, e.g. 5°C, above the freezing point of water at the start of the treatment process and is at most 100°C at the end thereof.

6. Installation for carrying out the method according to Claim 1, having comminution machines, separating appliances, conveying devices and an air circulation and treatment installation, characterized in that the machines and apparatuses for the processing and transportation of the mixture of products of value over the course of the treatment process are situated in a chamber which is hermetically sealed with respect to the outside and to which a continuous air circulation and treatment installation is connected.

7. Installation according to Claim 6, characterized in that the sealed chamber is divided into a plurality of sections (T1 to T4) which are connected to one another by means of locks (10), in particular rotary locks.

8. Installation according to one of Claims 6 and 7, characterized in that the sealed chamber is designed as a tunnel.

9. Installation according to one of Claims 6 to 8, characterized in that it is designed as a mobile installation.

10. Installation according to Claim 9, characterized in that it is arranged on a train comprising a plurality of carriages.

11. Installation according to Claims 7, 8 and 10, characterized in that each carriage has at least one tunnel section.

12. Installation according to Claim 11, characterized in that a lock is arranged at one end of each carriage and a movable tunnel connection with a disengageable attachment to the following tunnel section is arranged at the other end thereof.

## Revendications

1. Procédé pour le traitement de sous-produits de départ à partir d'un mélange hétérogène de produits de valeur qui ne sont plus employés, les parties solides des produits de valeur mélangés étant broyées progressivement en plusieurs étapes de procédé, séparées en fractions homogènes et soumises à un processus de déshumidification, caractérisé en ce que le processus de déshumidification s'étend de façon continue à tous les secteurs du processus de traitement, l'ensemble du processus de traitement ayant lieu dans une atmosphère fermée vers l'extérieur avec une circulation d'air entraînant la déshumidification.

2. Procédé selon la revendication 1, caractérisé en ce que l'atmosphère fermée est maintenue sous vide.

3. Procédé selon l'une quelconque des revendications précédentes, caractérisé en ce que l'air circulant est prélevé dans l'atmosphère fermée, déshumidifié et nettoyé, et l'air pur est remis en circulation dans l'atmosphère fermée.

4. Procédé selon l'une quelconque des revendications précédentes, caractérisé en ce que le mélange de produit de valeur se trouvant dans l'atmosphère fermée est refroidi au début du processus de traitement et est réchauffé à la fin de celui-ci.

5. Procédé selon l'une quelconque des revendications précédentes, caractérisé en ce que la température dans l'atmosphère fermée est, au début du processus de traitement, de quelques degrés, 5°C par exemple, au-dessus du point de congélation de l'eau et est au maximum de 100°C à la fin de ce processus.

6. Installation pour l'application du procédé selon la revendication 1, équipée de machines de broyage, de dispositifs de séparation, d'appareils de transport et d'une installation de circulation d'air et de traitement, caractérisée en ce que les équipements en machines et appareils pour le traitement et le transport du mélange de produit de valeur sur le chemin du processus de traitement se trouvent dans un espace hermétiquement fermé vers l'extérieur, auquel est raccordée une installation autonome de circulation d'air et de traitement.

7. Installation selon la revendication 6, caractérisée en ce que l'espace fermé est subdivisé en plusieurs sections (T1 à T4), qui sont reliées entre elles par des sas (10), en particulier des sas à rotor.

8. Installation selon l'une quelconque des revendications 6 et 7, caractérisée en ce que l'espace fermé est conçu comme un tunnel.

9. Installation selon l'une quelconque des revendications 6 à 8, caractérisée en ce qu'elle est conçue comme une installation mobile.

10. Installation selon la revendication 9, caractérisée en ce qu'elle est disposée sur un train comprenant plusieurs wagons.

11. Installation selon les revendications 7, 8 et 10, caractérisée en ce que chaque wagon présente au moins une section de tunnel.

12. Installation selon la revendication 11, caractérisée en ce qu'à une extrémité de chaque wagon et à l'autre extrémité de celui-ci sont disposés respectivement un sas et une liaison de tunnel mobile avec raccordement amovible à la section de tunnel suivante.
